# FASCICULE DE BREVET EUROPEEN

(11) **EP 2 171 329 B1**
(45) Date de publication et mention de la délivrance du brevet: **21.09.2011**
(21) Numéro de dépôt: 08806123.9
(22) Date de dépôt: 27.06.2008
(51) Int. Cl.: F16K 31/06

(54) **ELECTROVANNE DE RÉGULATION PROPORTIONNELLE DE DÉBIT À CONTRE-PRESSION**
ELEKTROVENTIL ZUR PROPORTIONALEN EINSTELLUNG EINES GEGENDRUCKFLUSSES
ELECTROVALVE FOR PROPORTIONAL ADJUSTMENT OF COUNTER-PRESSURE FLOW

(30) Priorité: 29.06.2007 FR 0704689
(43) Date de publication de la demande: 07.04.2010
(73) Titulaire: BorgWarner Inc., Auburn Hills, MI 48326 (US)
(72) Inventeur: ARMIROLI, Jean, F-06310 Beaulieu-sur-Mer (FR); CASSINI, Luca, I-18038 San Remo (IT); GOUBELY, Aime, F-06430 La-Trinite (FR); LHERMITTE, Bruno, F-06800 Cagnes-sur-Mer (FR); ESCANDELL, GILLIAN, F-06000 Nice (FR)
(74) Mandataire: Littolff, Denis
(86) Numéro de dépôt international: PCT/FR2008/051196
(87) Numéro de publication internationale: WO 2009/007625

(56) Documents cités:
- EP-A- 0 756 081
- DE-A1- 10 200 915
- GB-A- 1 122 316
- GB-A- 1 423 968
- US-B1- 6 364 431

## Description

La présente invention concerne une électrovanne de régulation proportionnelle de débit d'un fluide dans un circuit hydraulique. Une telle électrovanne est par exemple utilisée pour la régulation du débit pompé, dans un moteur, avant d'être envoyé aux injecteurs.

Dans ce type d'application, les électrovannes utilisées sont normalement fermées, ce qui signifie que, à courant nul dans la bobine de l'électroaimant, les moyens d'obturation de la vanne sont activés.

Les électrovannes de régulation de débit qui sont traditionnellement utilisées dans ce contexte présentent des configurations à chemise / tiroir. L'inconvénient de ces vannes réside dans la difficulté d'obtenir de faibles fuites, difficulté qui est directement liée à la maîtrise du jeu entre la chemise et le tiroir. Pour que les fuites soient acceptables, il faut que le jeu soit de l'ordre de 5 microns. Des valeurs plus faibles entraînent un surcoût notable et un risque de coincement de l'électrovanne. En revanche, des valeurs plus élevées, moins onéreuses à mettre en oeuvre, entraînent des fuites qui sont inacceptables pour le fonctionnement normal de l'électrovanne.

L'idée qui est à la base de l'invention est donc d'utiliser une configuration plus simple à bille et siège comme système de fermeture. Un tel système, **comme divulgué dans le document** US 6 364 431, avec les sièges traditionnellement mis en oeuvre, n'autorise toutefois pas de proportionnalité entre la levée de la bille et le débit. En effet, dès que la bille se lève, on est proche du débit maximal, et la vanne présente par conséquent plus le comportement d'une vanne tout ou rien que d'une vanne proportionnelle.

**Le document** DE 102 00 915 **divulgue quant à lui une électrovanne à fermoir mobile en translation où une égalisation des pressions est possible entre la pression dans un conduit d'arrivée du fluide et celle dans lequel évolue le noyau magnétique mobile et le poussoir associé. Dans cette configuration, la pression d'arrivée ne joue cependant aucun rôle sur le comportement électromagnétique de la vanne et cette dernière ne peut se trouver que dans deux états, à savoir une position fermée ou ouverte, sans régulation proportionnelle de débit.**

La présente invention propose une configuration d'électrovanne qui comporte un système d'obturation à bille, mais qui permet une utilisation avec une caractéristique débit / courant qui est proportionnelle dès lors que le courant dans la bobine de l'électroaimant est suffisant pour déplacer la bille.

A cet effet, l'électrovanne de régulation de l'invention comporte classiquement :
- un électroaimant constitué d'une bobine et d'un noyau mobile ;
- une bille d'obturation d'un siège séparant une chambre amont et une chambre aval du circuit hydraulique, le fluide circulant dans le sens de la levée de la bille ;
- des moyens de rappel en position fermée de la bille correspondant à l'état de repos de l'électrovanne en cas de courant nul dans la bobine ;
- des moyens pousseurs, soumis auxdits moyens de rappel et maintenant la bille sur le siège.

La même pression est appliquée de part et d'autre de la bille et/ou des moyens pousseurs qui s'appliquent sur la bille, en vue d'équilibrer les forces s'exerçant de chaque côté de ladite bille en l'absence de courant dans la bobine.

L'idée est d'obtenir une courbe fonctionnelle indépendante d'une pression d'entrée variable, et par conséquent de ramener cette pression en aval de manière à compenser l'effort exercé par le fluide sur la bille, par un effort directement exercé par le fluide sur les moyens pousseurs dans la chambre en aval. Cette compensation permet alors d'utiliser des ressorts à précharge beaucoup plus limitée que celle qui serait nécessaire si la pression d'entrée n'agissait pas sur les moyens pousseurs.

Dans cette hypothèse, il faudrait en effet recourir à des ressorts à précharge élevée, et l'ouverture ne s'opèrerait qu'à des valeurs de courant élevées, lorsque la force générée par l'électroaimant est suffisante pour vaincre la force de rappel du ressort. Une telle configuration est évidemment fortement dépendante de la pression de l'entrée.

A l'inverse, dans le cas de l'invention, l'équilibrage de la pression exercée sur la bille par le fluide en entrée par une contre-pression qui vient s'exercer sur les moyens pousseurs actionnant la bille permet de diminuer le rôle du ou des ressorts, et il est alors possible d'employer un ou des ressorts qui exercent une charge relativement faible, facile à vaincre par l'électroaimant.

Dans l'hypothèse de l'invention, comme cela a été précisé auparavant, le fluide circule dans le sens de la levée de la bille pour éviter les phénomènes de collage à faible débit, qui confèrent également un comportement tout ou rien que l'on veut éviter en pied de la caractéristique débit / courant. La pression amont étant toujours présente, elle contribue à une bonne stabilité de la vanne car il ne se crée pas de dépression ni de bulle d'air.

Selon une première configuration possible, à pression d'entrée s'exerçant axialement en amont, la bille est repoussée au contact du siège par un poussoir sollicité par le noyau mobile de l'électroaimant sous l'action des moyens de rappel lorsque le courant dans la bobine est nul, un orifice traversant étant pratiqué axialement dans ledit noyau mobile, qui coulisse dans un espace relié à la chambre amont par un conduit.

Le passage reliant la chambre amont à l'espace de coulissement du noyau et le canal qui traverse ce dernier permettent en fait de ramener la pression d'entrée sur les composants qui exercent une pression de l'autre côté de la bille, en direction du siège, et d'obtenir l'effet recherché au travers de la présente invention.

Cette configuration implique une communication entre l'espace de coulissement du noyau et la chambre amont où règne la pression d'entrée. Des fuites vers la chambre aval sont certes possibles, mais elles sont réduites car le diamètre du poussoir est relativement petit et la longueur de recouvrement importante, en tout cas beaucoup plus réduit que le diamètre du tiroir dans une configuration à chemise / tiroir, rendant possible l'utilisation de tolérances de fabrication des pièces et de jeux standards.

Selon une variante à la configuration précitée mettant en oeuvre une pression amont radiale, la bille est sollicitée au contact du siège par un poussoir actionné par un ressort dans la chambre aval, et commandée à l'ouverture par un arbre sollicité par le noyau mobile et un ressort du côté de la chambre amont. Un conduit relie alors la chambre aval et l'espace dans lequel coulisse le noyau mobile, qui est aussi muni d'un orifice traversant.

Ce type de configuration s'applique au cas d'une pression d'entrée arrivant radialement par rapport à la géométrie de l'électrovanne. La circulation du fluide se faisant également dans le sens de la levée de la bille, il est dans ce cas nécessaire d'utiliser deux ressorts. Dans cette version, la bille peut être solidaire de l'arbre afin d'éviter des décollements entre ces deux pièces, la pièce utilisée ayant alors la forme d'une quille.

Dans les deux versions, de préférence, le siège de la bille est de forme **sphérique de diamètre sensiblement égal à celui de la bille. Cette caractéristique est également importante, car l'écartement des deux formes sphériques permet d'obtenir une section de passage qui croît régulièrement en fonction de la levée de la bille. Une meilleure régulation du débit est ainsi obtenue, l'accroissement de la section de passage étant lent car correspondant à une course plus importante que dans d'autres configurations lors de la levée de la bille, contribuant à une maîtrise plus aisée de la proportionnalité recherchée.**

Le diamètre du poussoir est égal au diamètre de contact bille / siège. Ceci permet d'optimiser la compensation effectuée par la pression d'entrée ramenée sur le poussoir. Un meilleur équilibrage de la pression par la contre-pression qui vient s'exercer sur le poussoir est obtenu lorsque cette condition sur les diamètres de la bille et du poussoir est appliquée.

L'invention va à présent être décrite plus en détail, en référence aux figures annexées, pour lesquelles :
- la figure 1 est une vue en coupe de la première variante de la présente invention, la configuration à pression d'entrée axiale ;
- la figure 2 illustre une caractéristique débit / courant obtenue avec l'électrovanne de la figure 1 ; et
- la figure 3 montre la seconde variante à pression d'entrée radiale.

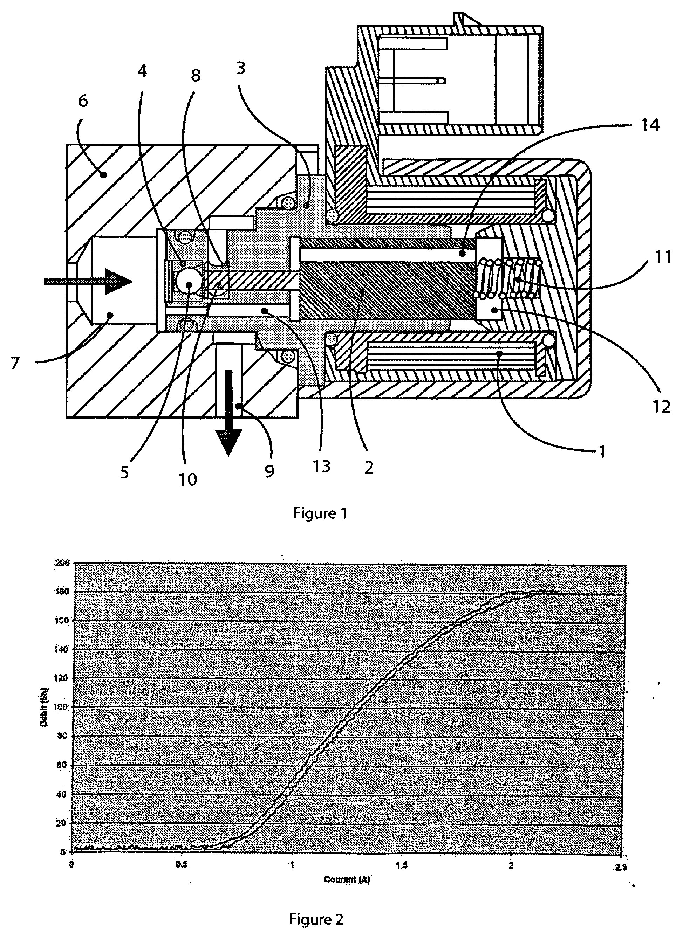

En référence à la figure 1, l'électrovanne comporte classiquement un électroaimant constitué d'une bobine (1) et d'un noyau mobile (2) coulissant dans une pièce polaire (3) dans laquelle est emmanché un siège (4) pour une bille (5). Cette bille (5) constitue le moyen d'obturation de l'électrovanne de l'invention, électrovanne fermée au repos, c'est-à-dire lorsque aucun courant ne parcourt la bobine (1) de l'électroaimant. Un corps (6) définit avec la pièce polaire (3) une chambre amont (7) où règne la pression d'entrée, et une chambre aval (8) communiquant avec un orifice d'échappement (9).

La bille (5) est sollicitée au contact du siège (4) par un poussoir (10) lui-même actionné par le noyau mobile (2) et des moyens de rappel constitués d'un ressort (11). Pour obéir à la logique de l'invention, l'espace de coulissement du ressort (12) est relié à la chambre amont (7) par un passage (13), la contre-pression pouvant alors s'appliquer dans les conditions définies ci-dessus car le noyau mobile (2) présente un canal traversant (14) permettant à la pression d'entrée de s'exercer sur la face du noyau (2) distale du poussoir (10). Le fonctionnement est tel que décrit auparavant : la pression qui règne dans la chambre amont (7) est ramenée dans l'espace de coulissement (12) du noyau mobile (2), et une contre-pression s'exerce sur ledit noyau mobile (2), et par conséquent sur le poussoir (10), dont le diamètre est équivalent au diamètre de contact bille (5) / siège (4). Lorsqu'un courant suffisant parcourt la bobine (1) de l'électroaimant, le noyau mobile se décale vers la droite de la figure, à l'encontre du ressort (11). Celui-ci n'a alors nul besoin de présenter une précharge élevée, puisque la contre-pression exercée sur le noyau mobile (2) est égale à et compense alors la pression d'entrée. Le courant nécessaire à ouvrir l'électrovanne est donc relativement faible, comme illustré en figure 2. Dès que l'électrovanne de l'invention est ouverte et à mesure que le courant augmente, le débit augmente de manière sensiblement linéaire, notamment du fait de l'existence du siège de forme sphérique dont le diamètre est sensiblement égal à celui de la bille d'obturation.

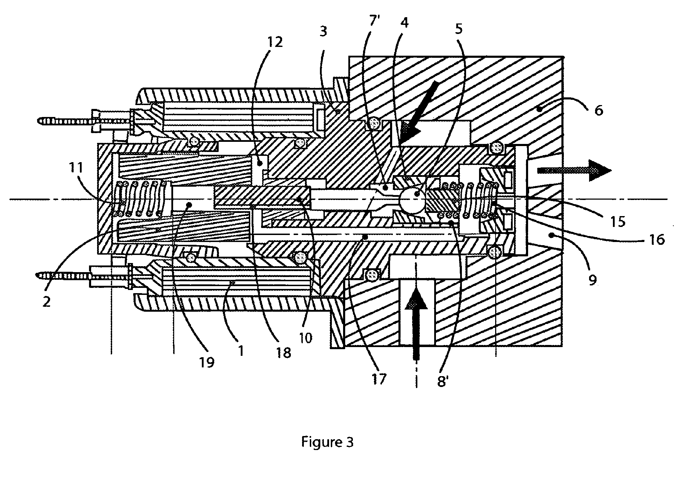

Dans la figure 3, montrant une seconde variante d'électrovanne selon l'invention, les composants qui sont identiques à ceux de la variante de la figure 1 présentent la même référence. Dans cette hypothèse, la pression d'entrée est radiale et la pression de sortie axiale, et par conséquent inversées par rapport à la solution de la figure 1.

Le principe appliqué est cependant le même. En l'espèce, la chambre amont (7') se situe du côté du noyau mobile (2) de l'électroaimant, alors que la chambre aval (8') est du côté opposé. La circulation du fluide se faisant aussi dans le sens de la levée de la bille, il est nécessaire d'utiliser deux ressorts et deux poussoirs. Ainsi, un poussoir (15) coopérant avec un ressort (16) est disposé dans la chambre aval (8'). L'équivalent du passage (13) de la figure 1 est ici constitué par le canal (17), faisant communiquer l'espace (12) de coulissement du noyau mobile (2) et la chambre aval (8'). La pression de ladite chambre (8') se retrouve dans la chambre de coulissement du noyau (2) du fait de l'existence du canal (17) et d'un passage (18) pratiqué dans le poussoir (10), par exemple de forme trilobée, débouchant sur un conduit central (19) du noyau mobile (2).

Les ressorts (11, 16) peuvent être faiblement chargés, du fait de l'existence de la contre-pression également permise par cette configuration.

La bille (5) et l'arbre (10) sont de préférence solidaires pour éviter d'avoir à charger fortement le ressort (16) en cas de pression d'entrée élevée (et par conséquent de charger fortement mais légèrement moins le ressort (11) pour aider le noyau à se déplacer).

## Revendications

1. Electrovanne de régulation proportionnelle de débit d'un fluide dans un circuit hydraulique comportant :
- un électroaimant constitué d'une bobine (1) et d'un noyau mobile (2) ;
- une bille (5) d'obturation d'un siège (4) séparant une chambre amont (7) et une chambre aval (8) du circuit hydraulique, le fluide circulant dans le sens de la levée de la bille (5) ;
- des moyens de rappel (11) en position fermée de la bille (5) correspondant à l'état de repos de l'électrovanne en cas de courant nul dans la bobine (1) ;
- des moyens pousseurs (10), soumis auxdits moyens de rappel (11) et maintenant la bille (5) sur le siège (4) ;
**caractérisée en ce que** la bille (5) est repoussée au contact du siège (4) par un poussoir (10) sollicité par le noyau mobile (2) de l'électroaimant sous l'action des moyens de rappel (11) lorsque le courant dans la bobine (1) est nul, un orifice traversant (14) étant pratiqué axialement dans ledit noyau mobile (2), qui coulisse dans un espace (12) relié à la chambre amont (7) par un conduit (13).

2. Electrovanne de régulation selon la revendication précédente, **caractérisée en ce que** le siège (4) de la bille (5) est de forme sphérique.

3. Electrovanne de régulation selon la revendication précédente, **caractérisée en ce que** le diamètre du siège (4) sphérique est sensiblement égal au diamètre de la bille (5) d'obturation.

4. Electrovanne de régulation selon la revendication précédente, **caractérisée en ce que** le diamètre du poussoir (10) est égal au diamètre de contact bille (5) / siège (4).

5. Electrovanne de régulation proportionnelle de débit d'un fluide dans un circuit hydraulique comportant :
- un électroaimant constitué d'une bobine (1) et d'un noyau mobile (2) ;
- une bille (5) d'obturation d'un siège (4) séparant une chambre amont (7') et une chambre aval (8') du circuit hydraulique, le fluide circulant dans le sens de la levée de la bille (5) ;
- des moyens de rappel (11,16) en position fermée de la bille (5) correspondant à l'état de repos de l'électrovanne en cas de courant nul dans la bobine (1) ;
- des moyens pousseurs (10,15), soumis auxdits moyens de rappel (11,16) et maintenant la bille (5) sur le siège (4) ;
**caractérisée en ce que** la bille (5) est sollicitée au contact du siège (4) par un poussoir (15) actionné par un ressort (16) dans la chambre aval (8'), et commandée à l'ouverture par un arbre (10) sollicité par le noyau mobile (2) et un ressort (11) dans la chambre amont (7'), un conduit (17) reliant la chambre aval (8') et l'espace (12) dans lequel coulisse le noyau mobile (2), un orifice traversant (18) étant pratiqué axialement dans l'arbre (10) et débouchant sur un conduit central (19) du noyau mobile (2).

6. Electrovanne de régulation selon la revendication précédente, **caractérisée en ce que** le siège (4) de la bille (5) est de forme sphérique.

7. Electrovanne de régulation selon la revendication précédente, **caractérisée en ce que** le diamètre du siège (4) sphérique est sensiblement égal au diamètre de la bille (5) d'obturation.

8. Electrovanne de régulation selon la revendication précédente, **caractérisée en ce que** la bille (5) est solidaire de l'arbre (10).

9. Electrovanne de régulation selon la revendication précédente, **caractérisée en ce que** le diamètre du poussoir (15) est égal au diamètre de contact bille (5) / siège (4).

## Claims

1. Solenoid valve for proportional adjustment of flow of a fluid in a hydraulic circuit comprising:
- an electromagnet consisting of a coil (1) and of a movable core (2);
- a ball (5) for shutting off a seat (4) separating an upstream chamber (7) and a downstream chamber (8) of the hydraulic circuit, the fluid flowing in the direction of lifting the ball (5);
- return means (11) in closed position of the ball (5) corresponding to the rest state of the solenoid valve in the event of zero current in the coil (1);
- pushing means (10) subjected to the said return means (11) and holding the ball (5) on the seat (4) ;
**characterized in that** the ball (5) is pushed back into contact with the seat (4) by a pusher (10) actuated by the movable core (2) of the electromagnet under the action of the return means (11) when the current in the coil (1) is zero, a through-hole (14) being made axially in the said movable core (2), which slides in a space (12) connected to the upstream chamber (7) by a duct (13).

2. Adjustment solenoid valve according to the preceding claim, **characterized in that** the seat (4) of the ball (5) is of spherical shape.

3. Adjustment solenoid valve according to the preceding claim, **characterized in that** the diameter of the spherical seat (4) is substantially equal to the diameter of the shut-off ball (5).

4. Adjustment solenoid valve according to the preceding claim, **characterized in that** the diameter of the pusher (10) is equal to the diameter of ball (5)/seat (4) contact.

5. Solenoid valve for proportional adjustment of flow of a fluid in a hydraulic circuit comprising:
- an electromagnet consisting of a coil (1) and of a movable core (2);
- a ball (5) for shutting off a seat (4) separating an upstream chamber (7') and a downstream chamber (8') of the hydraulic circuit, the fluid flowing in the direction of lifting the ball (5);
- return means (11, 16) in closed position of the ball (5) corresponding to the rest state of the solenoid valve in the event of zero current in the coil (1);
- pushing means (10, 15) subjected to the said return means (11, 16) and holding the ball (5) on the seat (4);
**characterized in that** the ball (5) is forced into contact with the seat (4) by a pusher (15) actuated by a spring (16) in the downstream chamber (8'), and opened by a shaft (10) forced by the movable core (2) and a spring (11) in the upstream chamber (7'), a duct (17) connecting the downstream chamber (8') and the space (12) in which the movable core (2) slides, a through-hole (18) being made axially in the shaft (10) and opening onto a central duct (19) of the movable core (2).

6. Adjustment solenoid valve according to the preceding claim, **characterized in that** the seat (4) of the ball (5) is of spherical shape.

7. Adjustment solenoid valve according to the preceding claim, **characterized in that** the diameter of the spherical seat (4) is substantially equal to the diameter of the shut-off ball (5).

8. Adjustment solenoid valve according to the preceding claim, **characterized in that** the ball (5) is secured to the shaft (10).

9. Adjustment solenoid valve according to the preceding claim, **characterized in that** the diameter of the pusher (15) is equal to the diameter of ball (5)/seat (4) contact.

## Patentansprüche

1. Elektroventil zur proportionalen Einstellung eines Fluiddurchflusses in einem Hydraulikkreis, umfassend:
- einen Elektromagneten, der aus einer Spule (1) und einem beweglichen Kern (2) besteht;
- eine Kugel (5) zum Verschließen eines Sitzes (4), der eine stromaufwärtige Kammer (7) und eine stromabwärtige Kammer (8) des Hydraulikkreises trennt, wobei das Fluid in Hubrichtung der Kugel (5) zirkuliert;
- Mittel (11) zum Zurückholen der Kugel (5) in die geschlossene Stellung, die dem Ruhezustand des Elektroventils entspricht, wenn kein Strom durch die Spule (1) fließt;
- Schiebemittel (10), die den Rückholmitteln (11) ausgesetzt sind und die Kugel (5) auf dem Sitz (4) halten;
**dadurch gekennzeichnet, dass** die Kugel (5) durch einen Schieber (10), der durch den beweglichen Kern (2) des Elektromagneten unter Wirkung der Rückholmittel (11) beaufschlagt wird, wenn der Strom in der Spule (1) null ist, in Kontakt mit dem Sitz (4) gedrückt wird; wobei eine Durchgangsöffnung (14) axial in dem beweglichen Kern (2) ausgebildet ist, der in einem durch einen Kanal (13) mit der stromaufwärtigen Kammer (7) verbundenen Raum (12) gleitet.

2. Einstellungselektroventil nach dem vorhergehenden Anspruch, **dadurch gekennzeichnet, dass** der Sitz (4) der Kugel (5) eine sphärische Form aufweist.

3. Einstellungselektroventil nach dem vorhergehenden Anspruch, **dadurch gekennzeichnet, dass** der Durchmesser des sphärischen Sitzes (4) im Wesentlichen gleich dem Durchmesser der Verschlusskugel (5) ist.

4. Einstellungselektroventil nach dem vorhergehenden Anspruch, **dadurch gekennzeichnet, dass** der Durchmesser des Schiebers (10) gleich dem Durchmesser des Kugel (5)/Sitz (4)-Kontakts ist.

5. Elektroventil zur proportionalen Einstellung eines Fluiddurchflusses in einem Hydraulikkreis, umfassend:
- einen Elektromagneten, der aus einer Spule (1) und einem beweglichen Kern (2) besteht;
- eine Kugel (5) zum Verschließen eines Sitzes (4), der eine stromaufwärtige Kammer (7') und eine stromabwärtige Kammer (8') des Hydraulikkreises trennt, wobei das Fluid in Hubrichtung der Kugel (5) zirkuliert;
- Mittel (11, 16) zum Zurückholen der Kugel (5) in die geschlossene Stellung, die dem Ruhezustand des Elektroventils entspricht, wenn kein Strom durch die Spule (1) fließt;
- Schiebemittel (10, 15), die den Rückholmitteln (11, 16) ausgesetzt sind und die Kugel (5) auf dem Sitz (4) halten;
**dadurch gekennzeichnet, dass** die Kugel (5) durch einen Schieber (15), der durch eine Feder (16) in der stromabwärtigen Kammer (8') betätigt wird, in Kontakt mit dem Sitz (4) beaufschlagt wird, und durch eine Welle (10), die durch den beweglichen Kern (2) und eine Feder (11) in der stromaufwärtigen Kammer (7') beaufschlagt wird, zum Öffnen angesteuert wird, wobei ein Kanal (17) die stromabwärtige Kammer (8') und den Raum (12), in dem der bewegliche Kern (2) gleitet, verbindet, wobei eine Durchgangsöffnung (18) axial in der Welle (10) ausgebildet ist und in einem mittleren Kanal (19) des beweglichen Kerns (2) mündet.

6. Einstellungselektroventil nach dem vorhergehenden Anspruch, **dadurch gekennzeichnet, dass** der Sitz (4) der Kugel (5) eine sphärische Form aufweist.

7. Einstellungselektroventil nach dem vorhergehenden Anspruch, **dadurch gekennzeichnet, dass** der Durchmesser des sphärischen Sitzes (4) im Wesentlichen gleich dem Durchmesser der Verschlusskugel (5) ist.

8. Einstellungselektroventil nach dem vorhergehenden Anspruch, **dadurch gekennzeichnet**, die Kugel (5) fest mit der Welle (10) verbunden ist.

9. Einstellungselektroventil nach dem vorhergehenden Anspruch, **dadurch gekennzeichnet**, der Durchmesser des Schiebers (15) gleich dem Durchmesser des Kugel (5)/Sitz (4)-Kontakts ist.
